# EUROPEAN PATENT SPECIFICATION

(11) **EP 1 842 803 B1**
(45) Date of publication and mention of the grant of the patent: **23.06.2010**
(21) Application number: 07102862.5
(22) Date of filing: 22.02.2007
(51) Int. Cl.: B65G 1/04, B65G 1/08

(54) **An automatic warehouse**
Automatisches Lager
Entrepôt automatique

(30) Priority: 04.04.2006 IT RE20060045
(43) Date of publication of application: 10.10.2007
(73) Proprietor: Costi S.r.l., 41040 Fiorano Modenese (Modena) (IT)
(72) Inventor: Costi, Silvano, 41040, FIORANO MODENESE (MODENA) (IT)
(74) Representative: Corradini, Corrado

(56) References cited:
- DE-A1- 10 021 365
- US-A- 3 750 804

## Description

The invention relates to an automatic warehouse, of a type used in industry or wholesale distribution for storing large quantities of different kinds of items, according to the preamble of Claim 1.

As is known, automatic warehouses of this type normally comprise a large arrangement of racking having frontal access and affording a plurality of compartments, each of which is destined to contain a generally homogeneous line of goods.

The compartments are singly provided with an inclined bottom which enables progressive downwards sliding of items towards the front part of the racks, from which they are usually removed one at a time.

The inclined bottom is typically a roller plane on which each item in the line rests, the downwards sliding action being facilitated by the rollers.

At the front end of each department there is a stop element, typically a wall rising from the bottom, against which the first item in the line is halted; the wall stops the item from falling from the shelving.

This type of warehouse further comprises an automatic stacker crane, which moves a platform in a vertical plane close to the racking, and can be arranged time-by-time adjacent to a front end of a predetermined compartment.

With the platform halted and in position, the stop element of the compartment is automatically moved into a rest position in which it no longer interferes with the items in the line.

The items to be loaded then run by force of gravity onto the inclined bottom of the compartment and the first item shifts onto the platform.

The platform is provided with a conveyor belt which advances the load away from the racking in order to free up space on the platform for further loads from the line to be boarded, up until a desired number of items is reached.

After the loading stage, the stop element of the compartment is automatically returned into the initial working position, and the crane moves the platform towards a different compartment, or towards an unloading position of the loads.

In particular, the unloading is done in a special bay, located in a fixed position on the opposite side of the crane from the racking, which unloading bay is provided with a conveyor belt which receives the loads from the platform of the crane and feeds them onto a further transport line to remove them from the vicinity.

The distancing line is usually constituted by a continuous collection conveyor belt which distances the loads from the automatic warehouse, for example towards a packaging or dispatch section.

Generally each automatic warehouse comprises a plurality of bays which feed the relative loads onto the distinct and successive points of the collection belt.

For this reason, the loads released by the collection platform remain on the bay until a free tract of the collection belt becomes available.

It is only at this moment that the loads are automatically advanced and transferred onto the collection and distancing belt.

Automatic warehouses need to be constructionally simple, so that the costs for installation and maintenance thereof are contained; they must also be highly reliable.

A further need is to render the operations of collection and distancing of the loads as fast as possible, in order to obtain higher productivity, especially in highly-automated sectors.

In the light of these requirements, the fact that the racking is provided with mobile stop elements to hold back the items in their relative compartments constitutes a drawback in the known automatic warehouses.

Each stop element has to activated independently of all the others, and therefore requires respective mechanisms to be operated, including dedicated motors, which inevitably complicate the construction of the racking and multiply the possible causes of faults.

US 3 750 804 discloses an automatic warehouse according to the preamble of claim 1, having a storage racking with a plurality of compartments, each of the compartments exhibiting an inclined bottom, the inclined bottom being defined by two distinct transversal crossbars, which are parallel and separated by an empty space.

The device has a load handling portion with a conveyor belt thereof from a retracted configuration thereof, in which the belt does not interfere with the racking and enables the loading platform to displace with respect to the racking, to an extended configuration thereof, obtained by motorized means, in which it enters the it enters the empty space between the two crossbars of a compartment and below the line of load units.

Stop elements are provided that have an extension and a position such as to leave a vertical corridor between the crossbars, in which the conveyor belt in an extended configuration may freely move in vertical direction.

The aim of the present invention is to obviate the above-mentioned drawback by providing a simple, rational and inexpensive solution.

A further aim of the invention is to make available an automatic warehouse in which the stages of collection and distancing of the stored loads is rapid and efficient.

The above aims are attained by the invention according to claim 1.

In a general sense, in the invention the inclined bottom of each compartment of the racking is defined by at least two distinct crossbars, parallel and separated by an empty space, which crossbars receive each load of a relative line contemporaneously; the load-collecting platform comprises at least a conveyor belt which can vary the shape thereof from a retracted configuration, in which it does not interfere with the racking and enables the platform to move with respect to the racking, to an extended configuration, in which it enters the empty space between two crossbars of a compartment, below the relative line of items.

Also in the invention, the stop elements associated with the compartments exhibit an extension and are located such that they leave a vertical corridor between the crossbars, into which the conveyor belt when in the extended configuration can freely move in a vertical direction.

Each of the crossbars of a compartment preferably bears a respective series of idle rollers, which are arranged in succession along the development of the crossbar itself, to form a roller plane which improves and facilitates the downwards sliding of the loads.

Thanks to this solution, the removal of the loads from each compartment is done following a succeeding series of stages as follow.

The collecting platform is located close to a compartment, with the conveyor belt in the retracted position thereof.

The conveyor belt is arranged in the extended configuration thereof, and extends into the empty space between the crossbars of the compartment, below the first loads of the relative line.

The platform is displaced upwards so that the conveyor belt raises the first loads from the line above the relative stop elements.

The conveyor belt can be activated to remove even more than one load, one after another, and to advance the loads onto the platform. The conveyor belt can also remove the loads still on the crossbars, which rise up onto the belt by sliding on the crossbars due to the force of gravity.

After having removed a predetermined number of loads, the conveyor belt continues to slide while the projecting part returns into the retracted configuration at the same velocity.

In this way, the loads already on the conveyor belt leave the roller plane by being raised above the stop element, while those still on the roller plane advance thereon up until they reach the stop element.

Thereafter the platform is displaced into the following load position.

From the above, it emerges that the invention does not require the stop elements associated to the compartments of the racking to be mobile or removable; therefore they can be made using fixed bodies which lack mechanisms for their displacement, as well as dedicated activating organs. This makes the automatic warehouse constructionally simpler and more reliable.

Further characteristics and advantages of the invention will better emerge from a reading of the following description, which is provided by way of nonlimiting example with the aid of the figures of the accompanying drawings, and in which:

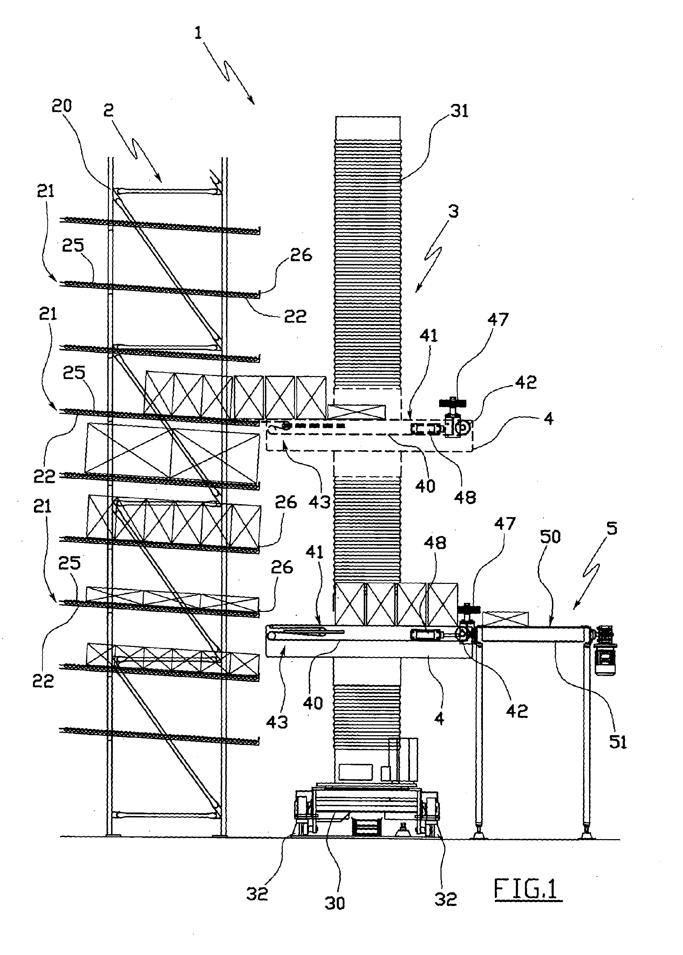

Figure 1 is a schematic lateral view of the automatic warehouse of the invention, in which the collecting platform is shown in two different positions, respectively during the collection of loads from the racking and during the release of the loads onto the distancing line;
Figure 2 is a plan view of the automatic warehouse of figure 1, in which the collection platform is shown during the release of the loads on the distancing line;
Figure 3 is a transparent perspective view showing the position of the loads on the racking of figures 1 and 2;
Figure 4 is the section along line IV-IV of figure 6;
Figures from 5 to 9 show a detail of figure 1 in 5 successive operative stages of the automatic warehouse.

The automatic warehouse 1 of the present invention is generally large or very large, and mainly destined to be installed internally of stock houses and distribution depots to contain very substantial quantities of products gathered in lots of various shapes and sizes.

The automatic warehouse 1 comprises at least a stack of racking 2, having frontal access, which has a rigid structure 20 of scaffolding to support a plurality of parallel racks 21 one stacked on top of another.

The racks 21 develop longitudinally over the whole extension of the racking 2 and are inclined transversally from top to bottom towards the part of the racking 2 which will be referred to as the frontal part.

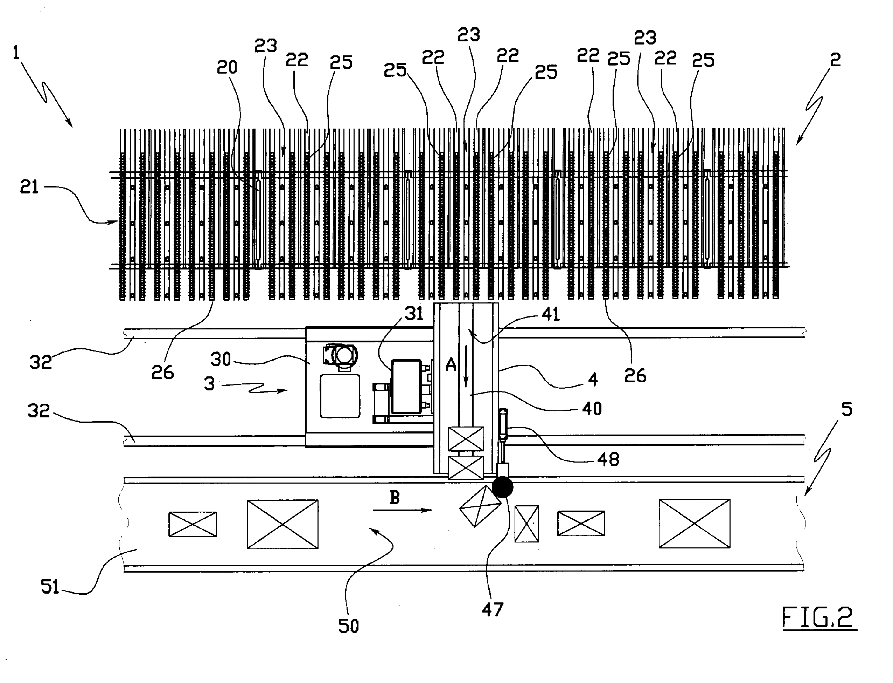

In particular, each rack 21 is defined by a plurality of crossbars, or transversal tracks 22, which are reciprocally parallel and distanced from one another by an empty space (see figure 2).

Each single rack 21 is ideally subdivided into a succession of distinct transversal compartments, each of which comprises at least a pair of crossbars 22 which define the bottom thereof, and each of which is predisposed to contain a line of load units.

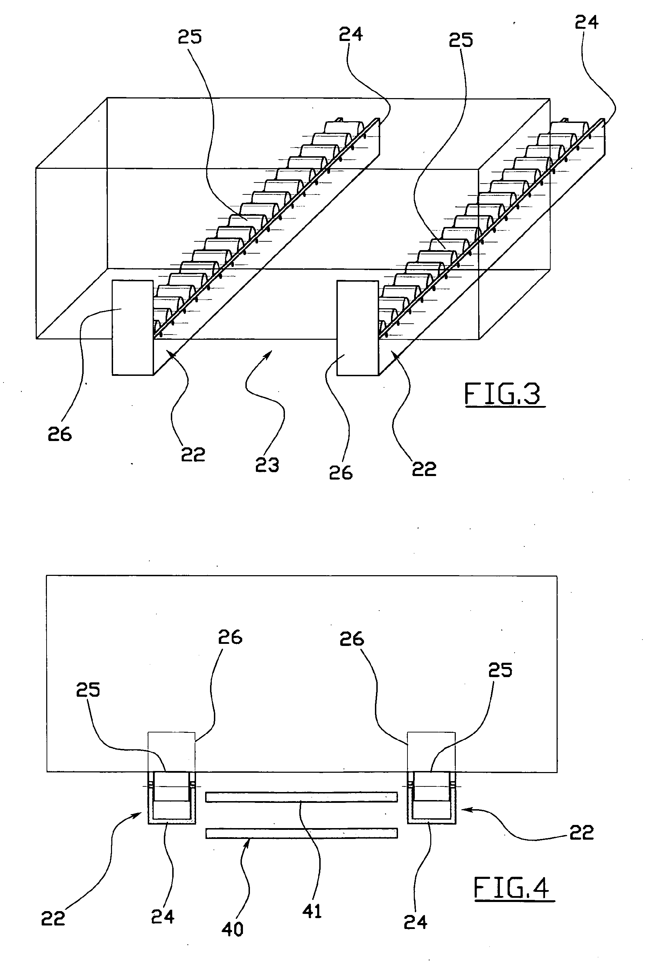

In this way, each load unit of the line rests at a same time on both the crossbars 22 and tends to run, due to the force of gravity, towards the front end of the compartment, i.e. the lowest part which is the frontal part of the racking 2 (see figure 3).

As illustrated in figures 3 and 4, each crossbar 22 is formed by a straight U-shaped element 24 which internally exhibits a plurality of horizontal-axis cylindrical rollers 25, arranged in a line.

The cylindrical rollers 25 are rotatably coupled in a fixed position on the element 24 and project superiorly of the open top end of the U of the element 24, so that overall the rollers 25 define a roller plane which will contact the loads of the relative lines, facilitating the sliding thereof in a downwards direction.

The front end of each crossbar 22 is provided with a respective salient wall 26, fixed solidly to the U-shaped element 24, which develops in such a way as to project from the element 24 itself, above the rest plane (defined by the cylindrical rollers 25) for the loads.

In this way, the salient wall 26 functions as a stop element for the first load of the relative line, effectively stopping the descent of all the loads of the line and keeping them inside the respective compartment thereof.

In particular, the stop walls 26 are of such dimensions as not to occupy the empty space 23 and to leave a vertical corridor between the crossbars 22 free.

In the illustrated example, the stop walls 26 are about as wide as the breadth of the crossbars 22.

The warehouse 1 further comprises a usual automatic stacker crane 3, which moves a loading platform 4 in a vertical plane close to the frontal part of the racking 2.

In particular, the stacker crane 3 comprises a translating truck 30 which moves horizontally on a pair of guide tracks 32 fixed to the ground, and a vertical column 31, fixed to the edge of the translating truck 30, on which the loading platform 4 is vertically mobile, activated by actuator means of known type.

A conveyor belt 40 is installed on board the loading platform 4, which conveyor belt 40 has a smaller width than the empty space 23 between the successive two crossbars 22 of each compartments. The upper branch 41 of the conveyor belt 40 provides a surface, flat and horizontal, which receives the loads collected from the racking 2.

In detail, the conveyor belt 40 is wound about a powered fixed-axis pulley 42, located in the distal part of the loading platform 4 (with respect to the racking 2); the pulley rotates to impart motion to the conveyor belt so that it can perform its function.

Further, the conveyor belt 40 is further wound on a return group 43 located in the part of the loading platform 4 which is proximal to the racking 2, so that the shape of the upper branch 41 of the conveyor belt 40 can be varied in extension within predetermined limits.

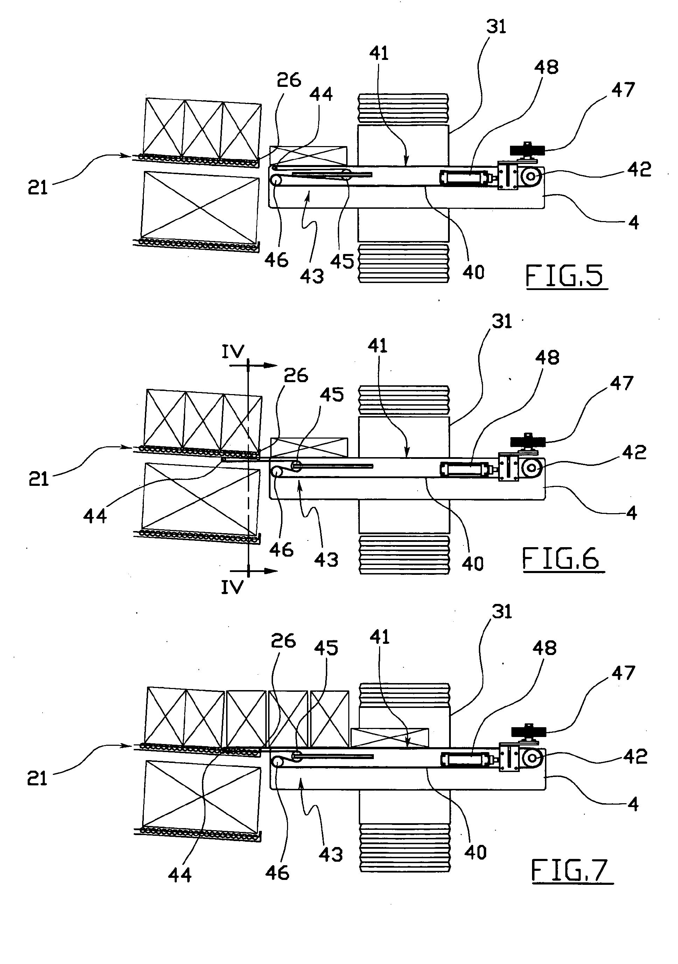

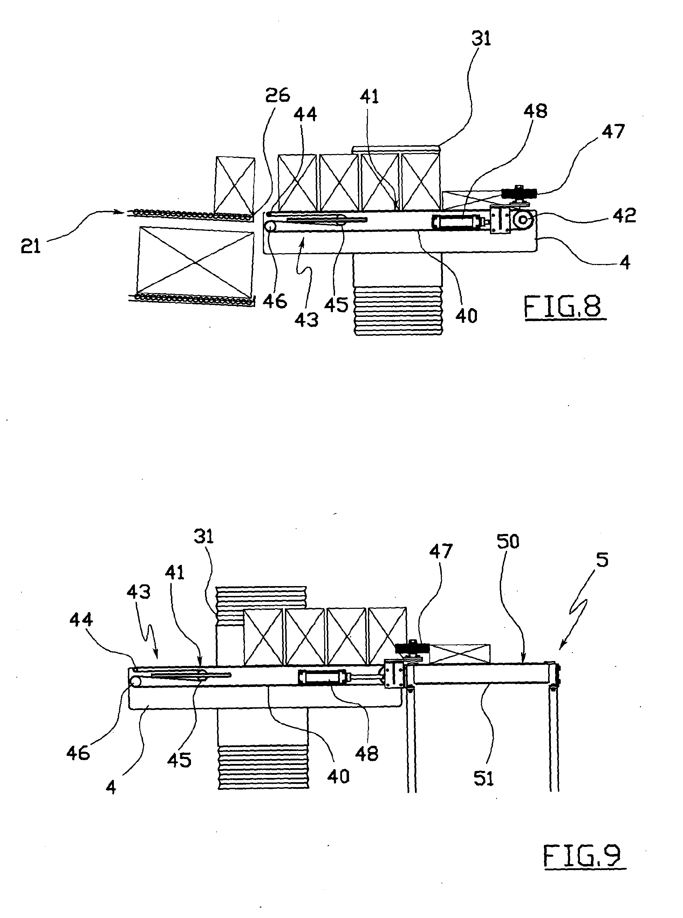

In particular, the return group 43 comprises three distinct rotating pulleys, respectively an upper pulley 44, an intermediate pulley 45 and a lower pulley 46, of which the upper pulley 44 defines, together with the powered pulley 42, the upper branch 41 of the conveyor belt 40 (see figures 5-9).

The lower pulley 46 is fixed, while the upper pulley 44 and the intermediate pulley 45 are mobile in a horizontal direction, in a same direction, alternatingly either nearing to or distancing from the racking 2; the upper pulley 44 and the intermediate pulley 45 are moved by actuators, of known type and not illustrated.

In this way, as can be seen in figures 5 and 6, the upper branch 41 of the conveyor belt 40 is extensible between a retracted configuration, in which it does not interfere with the racking 2 and enables the loading platform 4 to displace with respect thereto, and an extended configuration, in which it inserts into the empty space 23 between two crossbars 22 of a compartment, below the relative line of load units.

The warehouse 1 further comprises a distancing line 5, located on an opposite side of the crane 3 with respect to the racking 2, which comprises a mobile horizontal collection plane 50 which moves parallel to the racking 2.

In the illustrated example, the collection plane 50 is embodied by a further conveyor belt 51, which runs continuously and receives the loads removed from the loading platform 4 and advances them towards other operative zones, such as for example packaging or dispatching zones.

In particular, the further conveyor belt 51 runs in a transversal direction B to the running direction A of the conveyor belt 40 of the loading platform 4 (see figure 2).

The warehouse 1 is automatically managed by a control system which regulates the functioning of all the devices thereof, and which can be programmed by the operators according to needs.

In use, the loads are stocked on the racking 2 by known apparatus (not illustrated) which locate them on each compartment, introducing them from the back end of the racks 2.

Generally, same types of load units are located in a same compartment.

In this way, the above-mentioned load unit lines are built up, which, thanks to the inclination of the racks 21, tend to slide towards the front part of the racking 2, where they are held by the salient walls 26 fixed to the relative crossbars 22.

The removal of the loads is done by the loading platform 4 which is located in the frontal part of the racking 2, and is managed by the control system of the automatic warehouse 1.

In particular, the control system is programmed time-by-time according to a predetermined load program, which establishes the type of load unit and how many load units for each type have to be removed from the racking 2 during the following removal cycle.

Following the instructions received from the program, the stacker crane 3 moves the loading platform 4 into the frontal part of the racking 2 and stops it in front of each compartment containing load units to be removed.

When the loading platform 4 reaches each stop position, it follows a series of stages which are repeated identically for each single compartment, and which are illustrated herein below with reference to only one of the compartments.

As illustrated in figure 5, the conveyor belt 40 of the loading platform 4 is initially still, and is arranged in a retracted configuration.

The upper tract 41 is at a slightly lower height than the first load unit contained in each compartment, and is aligned with the empty space 23 comprised between the crossbars 22 which define the bottom of the compartment (see also figure 2).

At this point, the pulleys 44 and 45 both move on the loading platform 4 towards the racking 2, in order to bring the conveyor belt 40 into an elongate configuration and thus extend the upper branch 41 thereof.

In this way, the upper branch 41 inserts into the empty space 23 and is vertically positioned, even partially, below at least the first load unit of the line (see figure 6).

If the units to be loaded are very long, the conveyor belt 40 is possibly positioned below only a part of the first load unit, and therefore the second load unit is lifted and drawn onto the conveyor belt 40 by the motion of the belt 40.

Note that as the upper branch 41 lengthens without running, should there be located thereon a previously-collected load, the load will not move during the described extension stage.

When the conveyor belt 40 has reached the elongate configuration, the stacker crane 3 moves the loading platform 4 upwards, in order that the upper branch 41 can contact the lower base of at least the first load unit in the line, up until the unit is completely loaded onto the platform 4.

In particular, the raising of the loading platform 4 proceeds up until when the first loads of the line are raised to a higher level than the top edge of the stop walls 26 (see figure 7).

As illustrated in figure 4, this is made possible by the fact that the stop walls 26 are conformed and located such that they do not completely occupy the empty space 23, and leave the above-mentioned vertical corridor free within which the conveyor belt 40 can freely rise and descend.

At this point the powered pulley 42 is activated so that the conveyor belt 40 begins to run and advances the previously-raised load units onto the loading platform 4, distancing the load units from the racking 2.

As the load units displace on the loading platform 4, the units left in the compartment slide, by force of gravity, towards the frontal part of the racking 2 and are raised directly onto the conveyor belt 40.

When the control system recognises that it has loaded a desired number of units, the conveyor belt 40 continues to run while the extensible part retracts at the same speed as the belt 40.

In this way, the load units remaining on the crossbars 22 advance up until they rest against the salient walls 26, which keep them on the racking 2.

When this stage is complete, according to the loading program the stacker crane 3 can move the loading platform 4 towards a further compartment to remove another type of load, or it can move the platform 4 towards a position in which the platform 4 releases all the load units collected onto the mobile collection plane 50 of the distancing line 5.

In particular, to make the load release onto the collection plane 50 advantageously rapid, the control system of the automatic warehouse 1 is predisposed to keep instant-by-instant track of the degree of fullness of the plane 50.

In this way, the control system monitors the relative position of the free spaces on the collection plane 50 and directs the stacker crane 3 to bring and stop the loading platform 4 to a position exactly by the free spaces; this is done following the quickest possible route i.e. generally via a motion both horizontal and vertical.

Once this position has been reached, the conveyor belt 40 of the loading platform 4 is newly activated to run and load the units one by one onto the mobile collection plane 50, which then distances them from the warehouse 1. In particular, as the advancement directions A of the conveyor belt 40 and B of the collection plane 50 are perpendicular to one another, during the transfer of the loads there is a risk that they might accidentally fall from the distancing line 5.

To prevent this from happening, the loading platform 4 is provided with a guide organ 47, located downstream of the conveyor belt 40 with respect to the running direction B of the collection plane 50, which projects from the back end of the loading platform 4, and is partially raised above the collection plane 50.

The guide organ 47 contactingly receives each load which passes from the conveyor plane 40 onto the collection plane 50, in order to guide it into a correct position on the collection plane 50.

In the illustrated example, the guide organ 47 is a vertical-axis rotatable roller, which is borne at a free end of the stem of a jack 48 fixed onto the side of the loading platform 4.

The jack 48 moves the roller 47 between a rest position, in which it does not project from the back end of the loading platform 4 in order not to interfere with the movement thereof, and an operative position, in which it projects from the back end in order to perform the functions described above.

The rest position is occupied when the loading platform 4 is performing the stages of removal of the load units from the racking 2, while the operative position is taken up during the stages of release of the load units onto the collection plane 50.

Obviously an expert in the sector might make numerous modifications of a practical-applicational nature to the automatic warehouse 1, as described herein above, without its forsaking the inventive idea as it is expressed in the following claims.

For example, the loading platform 4 might be provided with a plurality of distinct extensible conveyor belts 40, arranged parallel and coplanarly.

In this case, the conveyor belts 40 will be singly alike to the one described herein, and will insert into the empty spaces 23 delimited by a group of adjacent crossbars 22.

Thanks to this solution, a greater loading surface will be made available, which will increase the static stability of the loading platform 4.

Naturally, the conveyor belts 40 must always function in perfect synchrony, so that the loads can be advanced thereon correctly.

## Claims

1. An automatic warehouse, comprising:
at least a storage racking (2) provided with a plurality of compartments each destined to contain a line of load units, each of which compartments exhibiting an inclined bottom and also exhibiting at least a stop element (26) located at a lower end of the compartment, the stop element (26) rising with respect to the bottom of the compartment, the stop element (26) being destined to arrest a descent of a first load unit of a line of the load units, and
at least a stacker crane (3), associated to the racking (2), which stacker crane (3) moves a loading platform (4) in order to arrange the platform (4) close to one or another of the compartments,
the inclined bottom of each of the compartments being defined by at least two distinct crossbars (22) which are parallel to one another and separated by an empty space (23), which two crossbars (22) contemporaneously receive each load unit of the line of units;
wherein the loading platform (4) comprises at least a conveyor belt (40) which can vary a shape thereof from a retracted configuration thereof, in which the belt (40) does not interfere with the racking (2) and enables the loading platform (4) to displace with respect to the racking (2), to an extended configuration thereof, in which it enters the empty space (23) between two crossbars (22) of a compartment and below the line of load units,
the at least one stop element (26) exhibiting a size and a location such as to leave a vertical corridor between the two crossbars (22) of the compartment, in which the conveyor belt (40) in the extended configuration thereof can move freely vertically,
**characterised in that** it comprises a collection plane (50), mobile in a prefixed advancing direction (B), which collection plane (50) receives the load units from the loading platform (4) and distances the load units from the warehouse, and **in that** it also comprises a control system for detecting a free space left available on the collection plane (50) and for directing the stacker crane (3) to position the loading platform (4) when loaded at the free space.

2. The automatic warehouse of claim 1, **characterised in that** the conveyor belt (40) is wound about a return pulley group (44, 45, 46) which defines a shape of the conveyor belt (40) and which is susceptible to varying the relative positions thereof to vary a shape of the conveyor belt (40).

3. The automatic warehouse of claim 2, **characterised in that** the return pulley group comprises at least two pulleys (44, 45) which are mobile on the loading platform (4), alternatingly nearing and distancing from the racking (2).

4. The automatic warehouse of claim 3, **characterised in that** the mobile pulleys (44, 45) move in a horizontal direction.

5. The automatic warehouse of claim 3, **characterised in that** the mobile pulleys (44, 45) move in a same direction.

6. The automatic warehouse of claim 1, **characterised in that** it comprises a plurality of distinct parallel conveyor belts (40) which are each susceptible to contemporaneously varying a shape thereof, from the retracted configuration to the extended configuration thereof, which conveyor belts (40) enter the empty spaces (23) of a group of adjacent crossbars (22) of the racking (2).

7. The automatic warehouse of claim 1, **characterised in that** the stop element is a wall (26), which is salient with respect to the bottom of the relative compartment, which wall (26) is fixed to an end of a relative crossbar (22)

8. The automatic warehouse of claim 7, **characterised in that** the salient wall (26) exhibits a width which is equal to a width of the crossbar (22).

9. The automatic warehouse of claim 1, **characterised in that** it comprises a stop element for each crossbar (22) of a compartment.

10. The automatic warehouse of claim 1, **characterised in that** each crossbar (22) comprises a succession of rollers (25) which define a roller plane.

11. The automatic warehouse of claim 1, **characterised in that** the collection plane (50) comprises a further conveyor belt (51).

12. The automatic warehouse of claim 1, **characterised in that** the prefixed advancing direction (B) of the collection plane (50) is transversal with respect to the advancing direction (A) of the conveyor plane (40) of the loading platform (4).

13. The automatic warehouse of claim 1, **characterised in that** the loading platform (4) comprises a guide organ (47) for contactingly receiving each load unit which passes from the conveyor belt (40) of the loading platform (4) onto the collection plane (50), in order to bring the load unit into a correct position on the collection plane (50).

14. The automatic warehouse of claim 13, **characterised in that** the guide organ comprises a vertical-axis roller (47) located downstream of the loading platform (4) with respect to the advancing direction (B) of the collection plane (50).

15. The automatic warehouse of claim 13, **characterised in that** the guide organ (47) is associated to a motor (48) which moves the guide organ (47) between a work position, in which it overlies the collection plane (50), and a rest position, in which it does not overlie the collection plane (50).

## Patentansprüche

1. Ein automatisches Lager einschließlich:
Wenigstens eines Regallagers (2), das mit einer Vielzahl an Fächern ausgestattet ist, von denen jedes eine Reihe an Ladeeinheiten enthalten kann, wobei jedes Fach einen geneigten Boden und wenigstens ein Stoppelement (26) an einem unteren Ende des Faches aufweist, wobei das Stoppelement (26) in Bezug auf den Boden des Faches erhöht ist und das Stoppelement (26) dazu bestimmt ist, eine absinkende erste Ladeeinheit einer Reihe der Ladeeinheiten festzuhalten, und wenigstens eines Regalbediengerätes (3), das dem Regal (2) zugeordnet ist, wobei das Regalbediengerät (3) eine Ladeplattform (4) bewegt, um die Plattform (4) bei einem der Fächer anzuordnen,
der geneigte Boden jedes der Fächer wird von wenigstens zwei verschiedenen Querbalken (22) bestimmt, die parallel zueinander stehen und durch einen Freiraum (23) voneinander getrennt sind, wobei die beiden Querbalken (22) gleichzeitig jede Ladeeinheit der Einheitenreihe empfangen;
dabei enthält die Ladeplattform (4) wenigstens ein Förderband (40), das sich aus einer zusammengezogenen Anordnung, in welcher das Band (40) das Regal (2) nicht behindert und die Ladeplattform (4) in der Lage ist, sich in Bezug auf das Regal (2) zu verschieben, in eine ausgedehnte Anordnung verschieben kann, in welcher es in den Freiraum (23) zwischen zwei Querbalken (22) eines Faches unter der Reihe der Ladeeinheiten eindringt,
das wenigstens eine Stoppelement (26) ermöglicht dabei durch seine Größe und Stellung die Entstehung eines vertikalen Korridors zwischen den beiden Querbalken (22) des Faches, in welchem sich das Förderband (40) in der ausgedehnten Anordnung frei vertikal bewegen kann,
**dadurch gekennzeichnet, dass** eine Sammelebene (50) enthalten ist, die sich in einer festgelegten Vorlaufrichtung (B) bewegt, wobei die Sammelebene (50) die Ladeeinheiten von der Ladeplattform (4) in Empfang nimmt und die Ladeeinheiten von dem Lager wegführt, und dass außerdem ein Kontrollsystem zum Erkennen von Freiräumen auf der Sammelebene (50) und zum Lenken des Regalbediengerätes (3) zum Positionieren der beladenen Ladeplattform (4) beim Freiraum enthalten ist.

2. Das automatische Lager nach Patentanspruch 1, **dadurch gekennzeichnet, dass** das Förderband (40) um eine Umlenkrollengruppe (44, 45, 46) gewickelt ist, welche die Form des Förderbandes (40) bestimmt und die in der Lage ist, ihre jeweiligen Positionen zu ändern, um **dadurch** die Form des Förderbandes (40) zu ändern.

3. Das automatische Lager nach Patentanspruch 2, **dadurch gekennzeichnet, dass** die Umlenkrollengruppe wenigstens zwei auf der Ladeplattform (4) bewegliche Rollen (44, 45) beinhaltet, die sich dem Regal (2) abwechselnd annähern und sich davon entfernen.

4. Das automatische Lager nach Patentanspruch 3, **dadurch gekennzeichnet, dass** sich die beweglichen Rollen (44, 45) in horizontaler Richtung bewegen.

5. Das automatische Lager nach Patentanspruch 3, **dadurch gekennzeichnet, dass** sich die beweglichen Rollen (44, 45) in der gleichen Richtung bewegen.

6. Das automatische Lager nach Patentanspruch 1, **dadurch gekennzeichnet, dass** es eine Vielzahl an verschiedenen parallelen Förderbändern (40) enthält, die jeweils in der Lage sind, gleichzeitig ihre Form von der zurückgezogenen in die ausgedehnte Anordnung zu ändern, wobei die Förderbänder (40) in die Freiräume (23) einer Gruppe nebeneinanderliegender Querbalken (22) des Regals (2) eindringen.

7. Das automatische Lager nach Patentanspruch 1, **dadurch gekennzeichnet, dass** das Stoppelement eine Wand (26) ist, die vom Boden des jeweiligen Faches hervorsteht, wobei die Wand (26) an einem Ende eines jeweiligen Querbalkens (22) befestigt ist.

8. Das automatische Lager nach Patentanspruch 7, **dadurch gekennzeichnet, dass** die hervorstehende Wand (26) ebenso breit ist wie der Querbalken (22).

9. Das automatische Lager nach Patentanspruch 1, **dadurch gekennzeichnet, dass** es ein Stoppelement für jeden Querbalken (22) eines Faches enthält.

10. Das automatische Lager nach Patentanspruch 1, **dadurch gekennzeichnet, dass** jeder Querbalken (22) eine Abfolge an Walzen (25) beinhaltet, die eine Walzenebene bilden.

11. Das automatische Lager nach Patentanspruch 1, **dadurch gekennzeichnet, dass** die Sammelebene (50) ein weiteres Förderband (51) beinhaltet.

12. Das automatische Lager nach Patentanspruch 1, **dadurch gekennzeichnet, dass** die festgelegte Vorlaufrichtung (B) der Sammelebene (50) senkrecht zur Vorlaufrichtung (A) der Förderebene (40) der Ladeplattform (4) steht.

13. Das automatische Lager nach Patentanspruch 1, **dadurch gekennzeichnet, dass** die Ladeplattform (4) ein Leitorgan (47) zum berührenden Empfangen jeder vom Förderband (40) der Ladeplattform (4) auf die Sammelebene (50) gelangenden Ladeeinheit beinhaltet, um die Ladeeinheit in die richtige Position auf der Sammelebene (50) zu bringen.

14. Das automatische Lager nach Patentanspruch 13, **dadurch gekennzeichnet, dass** das Leitorgan eine Walze mit vertikaler Achse (47) beinhaltet, welche der Ladeplattform (4) in Bezug auf die Vorlaufrichtung (B) der Sammelebene (50) nachgeschaltet ist.

15. Das automatische Lager nach Patentanspruch 13, **dadurch gekennzeichnet, dass** dem Leitorgan (47) ein Motor (48) zugeordnet ist, welcher das Leitorgan (47) in eine Arbeitsstellung bringen kann, in der es die Sammelebene (50) überlagert, und in eine Ruhestellung, in der es die Sammelebene (50) nicht überlagert.

## Revendications

1. Un entrepôt automatique, comprenant :
au moins un rayonnage d'entreposage (2) doté d'une multitude de compartiments étant chacun destiné à contenir une ligne d'unités de charge, chaque compartiment présentant un fond incliné et présentant également au moins un élément de butée (26) situé à une extrémité inférieure du compartiment, l'élément de butée (26) s'élevant par rapport au fond du compartiment et étant destiné à arrêter une descente d'une première unité de charge d'une ligne d'unités de charge, et au moins une grue d'empilage (3), associée au rayonnage (2), ladite grue d'empilage (3) déplace une plateforme de chargement (4) afin de disposer la plateforme (4) proche de l'un des compartiments,
le fond incliné de chacun des compartiments étant défini par au moins deux barres transversales distinctes (22) parallèles l'une à l'autre et séparées par un espace vide (23), lesdites barres transversales (22) recevant simultanément chaque unité de charge de la ligne d'unités ;
où la plateforme de chargement (4) comprend au moins un tapis de transport (40) dont la forme peut varier entre une configuration rétractée, où le tapis (40) n'interfère pas avec le rayonnement (2) et permet à la plateforme de chargement (4) de se déplacer par rapport au rayonnement (2), et une configuration étendue, où il entre dans l'espace vide (23) entre deux barres transversales (22) d'un compartiment et au-dessous de la ligne d'unités de charge,
le ou les éléments de butée (26) ayant une taille et un emplacement permettant de laisser un couloir vertical entre les deux barres transversales (22) du compartiment, dans lequel le tapis de transport (40) en configuration étendue peut se déplacer librement à la verticale,
**caractérisé par le fait qu'**il comprend un plan de collecte (50), mobile dans une direction d'avancée prédéfinie (B), ledit plan de collecte (50) recevant les unités de charge de la plateforme de chargement (4) et éloignant les unités de charge de l'entrepôt, et **par le fait qu'**il comprend également un système de contrôle pour détecter un espace libre disponible sur le plan de collecte (50) et pour diriger la grue d'empilage (3) de manière à positionner la plateforme de chargement (4) au niveau de l'espace libre lorsque cette dernière est chargée.

2. L'entrepôt automatique selon la revendication 1, **caractérisé par le fait que** le tapis de transport (40) est enroulé autour d'un groupe de poulies de renvoi (44, 45, 46) qui définit une forme du tapis de transport (40) et qui est susceptible de varier les positions relatives de ces dernières pour modifier la forme du tapis de transport (40).

3. L'entrepôt automatique selon la revendication 2, **caractérisé par le fait que** le groupe de poulies de renvoi comprend au moins deux poulies (44, 45) qui sont mobiles sur la plateforme de chargement (4), s'approchant et s'éloignant alternativement du rayonnage (2).

4. L'entrepôt automatique selon la revendication 3, **caractérisé par le fait que** les poulies mobiles (44, 45) se déplacent dans une direction horizontale.

5. L'entrepôt automatique selon la revendication 3, **caractérisé par le fait que** les poulies mobiles (44, 45) se déplacent dans une même direction.

6. L'entrepôt automatique selon la revendication 1, **caractérisé par le fait qu'**il comprend une multitude de tapis de transport parallèles distincts (40) qui sont chacun susceptible de modifier simultanément leur forme, de al configuration rétractée à la configuration étendue, lesdits tapis de transport (40) entrent dans les espaces vides (23) d'un groupe de barres transversales adjacentes (22) du rayonnage (2).

7. L'entrepôt automatique selon la revendication 1, **caractérisé par le fait que** l'élément de butée est une paroi (26), qui est saillante par rapport au fond du compartiment correspondant, ladite paroi (26) étant fixée à une extrémité d'une barre transversale correspondante (22)

8. L'entrepôt automatique selon la revendication 7, **caractérisé par le fait que** la paroi saillante (26) présente une largeur égale à une largeur de la barre transversale (22).

9. L'entrepôt automatique selon la revendication 1, **caractérisé par le fait qu'**il comprend un élément de butée pour chaque barre transversale (22) d'un compartiment.

10. L'entrepôt automatique selon la revendication 1, **caractérisé par le fait que** chaque barre transversale (22) comprend une succession de rouleau (25) qui définit un plan de roulement.

11. L'entrepôt automatique selon la revendication 1, **caractérisé par le fait que** le plan de collecte (50) comprend un tapis de transport (51) supplémentaire.

12. L'entrepôt automatique selon la revendication 1, **caractérisé par le fait que** la direction d'avancée prédéfinie (B) du plan de collecte (50) est transversal par rapport à la direction d'avancée (A) du plan de transport (40) de la plateforme de chargement (4).

13. L'entrepôt automatique selon la revendication 1, **caractérisé par le fait que** la plateforme de chargement (4) comprend un organe de guidage (47) pour recevoir par contact chaque unité de charge qui passe du tapis de transport (40) de la plateforme de chargement (4) au plan de collecte (50), afin d'apporter l'unité de charge dans une position correcte sur le plan de collecte (50).

14. L'entrepôt automatique selon la revendication 13, **caractérisé par le fait que** l'organe de guidage comprend un rouleau à axe vertical (47) situé en aval de la plateforme de chargement (4) par rapport à la direction d'avancée (B) du plan de collecte (50).

15. L'entrepôt automatique selon la revendication 13, **caractérisé par le fait que** l'organe de guidage (47) est associé à un moteur (48) qui déplace l'organe de guidage (47) entre une position de travail, dans laquelle il recouvre le plan de collecte (50), et une position de repos, dans laquelle il ne recouvre pas le plan de collecte (50).
